(19) Europäisches Patentamt
European Patent Office
Office européen des brevets

(11) **EP 3 509 148 A1**

(12) **EUROPEAN PATENT APPLICATION**
published in accordance with Art. 153(4) EPC

(43) Date of publication:
**10.07.2019 Bulletin 2019/28**

(51) Int Cl.:
**H01M 8/18** *(2006.01)*          **H01M 4/86** *(2006.01)*

(21) Application number: **17846723.9**

(22) Date of filing: **01.09.2017**

(86) International application number:
**PCT/JP2017/031656**

(87) International publication number:
**WO 2018/043720 (08.03.2018 Gazette 2018/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **02.09.2016 JP 2016172243**

(71) Applicant: **Showa Denko K.K.
Tokyo 105-8518 (JP)**

(72) Inventors:
• **ICHIKAWA Masatoshi
  Tokyo 105-8518 (JP)**
• **ISEKI Keizo
  Tokyo 105-8518 (JP)**
• **HANAWA Kenzo
  Tokyo 105-8518 (JP)**

(74) Representative: **Strehl Schübel-Hopf & Partner
Maximilianstrasse 54
80538 München (DE)**

(54) **REDOX FLOW SECONDARY BATTERY AND ELECTRODE THEREOF**

(57)     The present invention provides a redox flow secondary battery including a positive electrode, a negative electrode facing the positive electrode, and an ion exchange membrane provided between the positive electrode and the negative electrode, at least one electrode of the positive electrode and the negative electrode has a metal protective film having an opening and a carbon electrode including carbon fibers in order from the ion exchange membrane side, and the height of the protruding peak portion of the surface of the metal protective film, which is in contact with the ion exchange membrane, is 0.1 to 2 $\mu$m.

FIG. 1

**Description**

Technical Field

The present invention relates to a redox flow secondary battery and an electrode thereof.

Priority is claimed on Japanese Patent Application No. 2016-172243, filed on September 2, 2016, the content of which is incorporated herein by reference.

Background Art

A redox flow secondary battery is known as a large capacity storage battery. The redox flow secondary battery generally has an ion exchange membrane separating an electrolyte, and electrodes provided on both sides of the ion exchange membrane. Positive electrode electrolytes and negative electrode electrolytes are supplied to respective sides across the ion exchange membrane, that is, a positive electrode chamber and a negative electrode chamber. Charging and discharging are performed by proceeding simultaneously oxidation reaction and reduction reaction on these electrodes. At the time of charging and discharging, for example, in a configuration in which hydrogen ions are generated at one of the electrodes, the generated hydrogen ions can move to the opposite electrode side through the ion exchange membrane, and electrical neutrality of the electrolyte can be maintained. For electrodes, carbon members are widely used (for example, Patent Documents l and 2). In addition, it is also known to use a metal such as titanium or zirconium for electrodes (for example, Patent Documents 3 and 4).

In the redox flow secondary battery, the electrodes are stored in each electrode chamber. The redox flow secondary battery operates while supplying an electrolyte into the electrode chamber and circulating the electrolyte. For example, when electrons of ions in the electrolyte pass to the electrode, the electrons are exchanged from the electrode through the outside. Protons are exchanged through the ion exchange membrane. In this way, the redox flow secondary battery performs charging and discharging.

In such a redox flow secondary battery, the carbon fibers or the like used for the electrode stick into the ion exchange membrane, and cracks, through-holes, or the like may be formed in the ion exchange membrane. When cracks or through-holes are formed in the ion exchange membrane, the positive electrode electrolyte supplied to the positive electrode-side electrode chamber (positive electrode chamber) and the negative electrode electrolyte supplied to the negative electrode-side electrode chamber (negative electrode chamber) are mixed, and a part of the redox flow secondary battery is short-circuited. Such a problem causes a decrease in the coulomb efficiency of the redox flow secondary battery and shortened life.

As means for preventing breakage of the ion exchange membrane, a method of making the ion exchange membrane thick so as not to penetrate the ion exchange membrane even if the carbon fiber sticks into the ion exchange membrane, or a method of providing a porous sheet material made of a material softer than the electrode between the electrode including carbon fibers or the like and the ion exchange membrane has been proposed (for example, Patent Document 5).

However, the above-described redox flow secondary battery has room for improvement in performance in terms of cell resistance and the like.

For example, the redox flow secondary battery described in Patent Document 3 presents the following use of an organic material such as a fluororesin, a phenolic resin, and an engineering plastic as a material that is softer than the positive electrode and the negative electrode. However, if these organic materials not having conductivity are provided between the positive electrode or the negative electrode and the ion exchange membrane, the distance between the electrode material and the ion exchange membrane is increased, and a portion not contributing to conduction is generated. Therefore, the cell resistance of the redox flow secondary battery rises.

Citation List

Patent Literature

Patent Document 1: Japanese Patent No. 3560181
Patent Document 2: Published Japanese translation No. 2014/033238 of PCT International Publication
Patent Document 3: Japanese Unexamined Patent Application, First Publication No. 2015-228364
Patent Document 4: Published Japanese translation No. 2015-156076 of PCT International Publication
Patent Document 5: Japanese Unexamined Patent Application, First Publication No. 2013-65530

SUMMARY OF INVENTION

Problem to be solved by the Invention

The present invention has been made in view of the above problems, and an object is to provide a redox flow secondary battery having low resistance and excellent coulomb efficiency.

Solution to Problem

As a result of intensive studies, the present inventors have found that by providing a metal protective film having an opening between an ion exchange membrane and a positive electrode and a negative electrode and defining the surface state of the metal protective film, thereby limiting short circuit by preventing damage to the ion exchange membrane, and limiting increase in cell resistance of the redox flow secondary battery.

That is, the present invention provides the following means in order to solve the above problems.

(1) A redox flow secondary battery according to a first aspect of the present invention is a redox flow secondary battery including a positive electrode, a negative electrode facing the positive electrode, and an ion exchange membrane provided between the positive electrode and the negative electrode, in which one or both of the positive electrode and the negative electrode include a metal protective film and a carbon electrode including carbon fibers in order from the ion exchange membrane side, a first main surface of the metal protective film is provided on the ion exchange membrane side, and the metal protective film has an opening, and a height (Rpk) of a protruding peak portion of a surface which is the first main surface is 0.1 to 2 μm.

The redox flow secondary battery according to the first aspect of the present invention preferably includes the following features. It is also preferable that the following features are combined with each other as necessary.

(2) The metal protective film and the carbon electrode may be provided on both the positive electrode and the negative electrode.

(3) When the thickness of the ion exchange membrane is T, the height of a protruding peak portion of the metal protective film may satisfy the following relational expression (1).

$$(Rpk(A) + Rpk(B)) \times 1.2 \leq T \leq 60 \ \mu m \ \dots \ (1)$$

(in Expression (1), T is the thickness (μm) of the ion exchange membrane, Rpk(A) is the height (μm) of the protruding peak portion of the metal protective film of the positive electrode, Rpk(B) is the height (μm) of the protruding peak portion of the metal protective film of the negative electrode, respectively)

(4) The metal protective film may be a metal electrode having conductivity.

(5) A surface of the metal electrode of the positive electrode may be coated with a noble metal or a noble metal oxide.

(6) A surface of the metal electrode of the negative electrode may be coated with carbon.

(7) A second metal electrode having an opening may be provided between the metal electrode and the carbon electrode, in which positions of the openings of the metal electrode and positions of the openings of the second metal electrode are shifted from each other.

(8) A second aspect of the present invention is a redox flow secondary battery metal electrode of a redox flow secondary battery, which is a metal electrode having an opening and having a height (Rpk) of a protruding peak portion of a surface of at least a first main surface of 0.1 to 2 μm.

The metal electrode according to the second aspect preferably includes the following features. It is also preferable that the following features are combined with each other as necessary.

(9) The metal electrode may be made of titanium or an alloy thereof.

(10) The metal electrode may be an expanded metal.

(11) The metal electrode may have a thickness of 0.2 mm or less.

(12) The surface of the metal electrode may be coated with a noble metal or a noble metal oxide.

(13) A noble metal element constituting the noble metal or the noble metal oxide may be one or more types of elements selected from the group consisting of iridium (Ir), rhodium (Rh), platinum (Pt) and ruthenium (Ru).

(14) The average thickness of a coating of the noble metal or the noble metal oxide may be 0.05 to 0.5 μm.

(15) The surface of the metal electrode may be coated with carbon.

(16) The carbon may be sputtered carbon, conductive diamond, diamond-like carbon, or a mixture thereof.

(17) The average thickness of a coating of the carbon may be 0.03 to 0.3 μm.

Effects of Invention

The redox flow secondary battery of the present invention has low resistance and excellent coulomb efficiency.

Brief Description of Drawings

FIG. 1 is a schematic cross-sectional schematic view of a redox flow secondary battery according to a first embodiment.
FIG. 2 is a schematic perspective view enlarging a part of a metal electrode of a redox flow secondary battery according to a second embodiment.

Description of Embodiments

Preferred examples of the redox flow secondary battery and the electrode of the present invention will be described in detail below with reference to the drawings as appropriate. In the present invention, there is provided an excellent metal electrode having an opening portion and at least having a height of a protruding peak portion of the surface, which is the first main surface, of 0.1 to 2 $\mu$m. Further, excellent secondary batteries and electrodes using this electrode are provided.

In the drawings used in the following description, in order to make the features of the present invention easy to understand, characteristic portions may be enlarged for the sake of convenience, and the dimensional ratios of the respective constituent elements may be different from the actual ones. Materials, dimensions, and the like in the following description are only exemplary examples, and without being limited thereto, it is possible to carry out the present invention by appropriately changing and modifying it within a range not changing the gist thereof.

(First Embodiment)

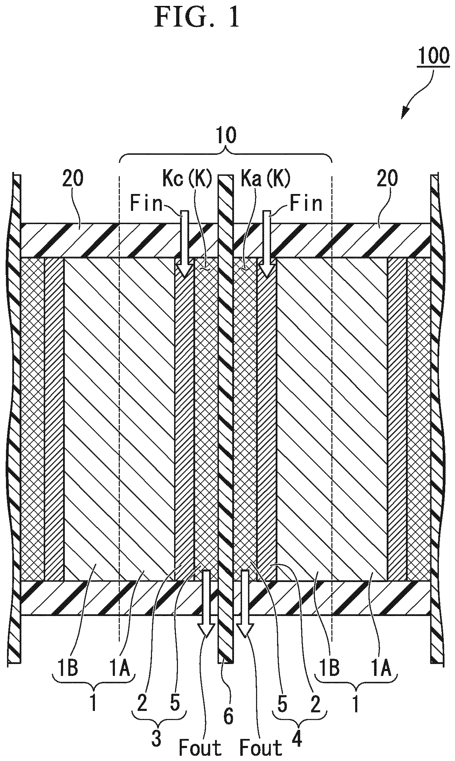

FIG. 1 is a schematic cross-sectional view of a redox flow secondary battery according to a first embodiment.

The redox flow secondary battery 100 shown in FIG. 1 includes a cell 10. More specifically, it has a cell stack structure in which a plurality of cells 10 are stacked. The number of stacked layers of the cells 10 can be appropriately changed depending on the application. Note that a single cell structure may be adopted. When a plurality of cells 10 are connected in series in the cell stack structure, a practical voltage can be obtained from the battery.

In such a structure, the electrolyte from the tank of the positive electrode electrolyte and the tank of the negative electrode electrolyte (not shown) may be circulated to each cell by using each pump (not shown), and the electrolytes in the same state can be distributed to each cell. Therefore, it is possible to equalize the state of charge and the like of each battery, and make the state of charge of each battery equal.

The cell 10 includes an ion exchange membrane 6 which is a diaphragm, a positive electrode 3 (a carbon electrode 2 and a metal protective film 5), and a negative electrode 4 (a metal protective film 5 and a carbon electrode 2). A pair of bipolar plates 1 is provided on each of surface sides which are not on the ion exchange membrane side, of each electrode. The ends of the electrode and the bipolar plate are covered with the cell frame 20. Although not clearly shown in FIG. 1, in the cell 10, there is a space where the electrolyte flows, respectively, for electrode chambers of the negative electrode side and the positive electrode side, and depending on the configuration of the cell, the electrolyte flows between the ion exchange membrane 6 and the electrode, through the inside of the electrode, or the like.

The outer circumference of the cell 10 is covered by the cell frame 20. FIG. 1 shows a state where two cell frames 20 sandwich the ion exchange membrane 6 from both sides. The cell frame 20 may be a structure having a frame shape, for example, and may be present between the ion exchange membranes 6 adjacent to each other in the stacking direction of the cell stack structure. In one set of cell frames 20, two electrode chambers K (Kc, Ka) surrounded by one set of bipolar plates 1 and one ion exchange membrane 6 are formed in the cell 10. One of the electrode chambers K is the positive electrode chamber Kc and the other is the negative electrode chamber Ka. The cell frame 20 prevents the electrolyte supplied to the positive electrode chamber Kc and the negative electrode chamber Ka from leaking to the outside. The cell frame 20 and the bipolar plate 1 may form a part of another cell 10 adjacent to the cell 10.

Hereinafter, the stacking direction of the cell stack structure in which the cell 10 is stacked is simply referred to as "stacking direction", and the plane direction perpendicular to the stacking direction of the cell stack structure is referred to as "in-plane direction".

(Cell)

As described above, one cell 10 has one set of bipolar plates 1, one positive electrode 3, one negative electrode 4, and one ion exchange membrane 6. Between the adjacent bipolar plates 1, a positive electrode 3, an ion exchange membrane 6, and a negative electrode 4 are disposed in order. The ion exchange membrane 6 blocks movement of the electrolyte between the positive electrode chamber Kc and the negative electrode chamber Ka, and passes protons (hydrogen ions).

<Bipolar Plate>

The bipolar plate 1 is a conductive plate which allows current to pass but does not pass electrolyte, and is a current collecting plate. The bipolar plate 1 is a current collector having a function of giving and receiving electrons between an electrode and the collector. The bipolar plate 1 has a positive electrode portion 1A and a negative electrode portion 1B. The positive electrode portion 1A and the negative electrode portion 1B are not clearly distinguished from each other, but are distinguished from each other as a constituent range of the cell 10 for the sake of convenience. In the bipolar plate 1, the side adjacent to the positive electrode of the cell is defined as the positive electrode portion 1A, and the side adjacent to the negative electrode of another cell is defined as the negative electrode portion 1B.

The material of the bipolar plate 1 can be arbitrarily selected, and it is not particularly limited as long as it has conductivity, is resistant to the electrolyte, and is capable of forming the electrode chamber. For example, a carbon-containing conductive material can be used. Specifically, examples include a conductive resin composed of graphite and an organic polymer compound, a conductive resin in which a part of graphite is substituted by at least one of carbon black and diamond-like carbon, a molded material obtained by kneading and molding carbon and a resin, or the like. Of these, it is preferable to use a molded material obtained by kneading and molding carbon and a resin.

<Positive Electrode and Negative Electrode>

The positive electrode 3 has an electrode 2 made of a layer containing carbon fibers (hereinafter referred to as a carbon electrode) and an electrode 5 made of a metal protective film having an opening, in this example, a metal foil having an opening (hereinafter referred to as metal electrode). The negative electrode 4 is configured with the carbon electrode 2 and the metal electrode 5. In both the positive electrode 3 and the negative electrode 4, the metal electrode 5 and the carbon electrode 2 are disposed in this order from the ion exchange membrane 6 side, and in the metal electrode 5, a first main surface to be described later is disposed to face the ion exchange membrane 6 side.

<Carbon Electrode>

Although the carbon electrode 2 can be arbitrarily selected, examples thereof include a conductive sheet containing carbon fibers. Here, the carbon fiber is a fibrous carbon, and examples thereof include a carbon fiber and a carbon nanotube. Among these, use of carbon fibers having a diameter of 1 $\mu$m or more is particularly preferable, because the conductive sheet is not easily broken. Since the carbon electrode 2 includes carbon fibers, the contact area between the electrolyte and the carbon electrode 2 is increased, and the reactivity of the redox flow secondary battery 100 is enhanced.

As a conductive sheet including carbon fibers, for example, carbon felt, carbon paper, or the like can be used. In the conductive sheet including carbon fibers, the end portion of the carbon fiber sometimes protrudes from the conductive sheet.

In a general structure, the conductive sheet and the ion exchange membrane are directly pressed against each other. Therefore, if there is an end portion of the carbon fiber protruding from the conductive sheet, there is a possibility that the end portion sticks into the ion exchange membrane and cracks or through-holes are formed in the ion exchange membrane. However, according to the configuration of the present invention, since the metal electrode 5 is present between the sheet and the membrane, the ion exchange membrane 6 is protected.

<Metal Protective Film>

The metal electrode 5 which is also a metal protective film is a conductive metal foil having an opening. The metal electrode 5 is a part of an electrode constituting the positive electrode or the negative electrode. The metal electrode 5 is provided in the electrode chambers K (the positive electrode chamber Kc and the negative electrode chamber Ka). The metal electrode 5 is disposed on at least one side of the ion exchange membranes 6, preferably on both sides.

The metal electrode 5 functions as a protective film for preventing the carbon fibers constituting the carbon electrode 2 from sticking into the ion exchange membrane 6. When the carbon fibers included in the carbon electrode stick into the ion exchange membrane 6 and cracks or through-holes are formed in the ion exchange membrane 6, the coulomb efficiency may decrease. However, in the present invention, due to the presence of the metal protective film, cracks or through-holes are unlikely to be formed, and the coulomb efficiency is unlikely to decrease.

The height (Rpk) of the protruding peak portion of the metal protective film will be described.

The height (Rpk) of the protruding peak portion of at least one main surface of the metal electrode 5 is controlled to 0.1 to 2 μm. Hereinafter, the surface of the metal electrode 5 whose height (Rpk) of the protruding peak portion is controlled as described above is referred to as a "first main surface". A second main surface is a surface on the back side of the electrode, that is, a surface on the opposite side to the first main surface, and this surface may also be similarly controlled as necessary. The metal electrode 5 is disposed such that the first main surface faces the ion exchange membrane 6 side. This is to prevent the metal electrode 5 itself which is also a metal protective film from causing cracks or through-holes in the ion exchange membrane 6.

The height (Rpk) of the protruding peak portion means the average height of the protruding peak portions protruding upward from the core portion defined on the load curve, obtained by measuring the surface shape. The core portion is defined as a region between the two height positions where the equivalent line obtained from the load curve intersects with the vertical axis at the position of the load length rate 0% and the vertical axis at the position of the load length rate 100%. In the load curve, the vertical axis is the height and the horizontal axis is the load length ratio.

The equivalent line is obtained at the center portion of the load curve including 40% of the measurement point of the roughness curve. The equivalent line is a straight line in which a secant line of a load curve obtained by setting the difference ΔMr of the load length rate to 40% has the gentlest slope.

It is calculated from the load curve because the load curve can be considered as the integration of the distribution (probability density) of the height of the contour curve. The height (Rpk) of the protruding peak portion is a value in consideration of the occurrence probability of the protrusion on the surface of the metal electrode 5 in contact with the ion exchange membrane 6.

For measurement of the surface shape of the metal electrode for obtaining the Rpk value, for example, a measuring device such as a laser microscope made by Keyence (product name: VK-X 150) can be used. Using a laser microscope, any surface other than the opening of the metal electrode 5 can be measured in a field of view of 100 μm × 100 μm square, and a load curve can be obtained for the surface roughness. Rpk can be calculated from its load curve. The Rpk measurement value is the average value of Rpks obtained by measuring any three points.

"Load curve" is defined in JIS B 0601: 2013 "geometric characteristic specification (GPS) of product - surface texture: contour curve method - term, definition and surface texture parameter", and is calculated from the total measurement points of surface height data in each pixel of the observation visual field image.

The details of "height (Rpk) of the protruding peak portion" are described in JIS B 0671-2: 2002 "geometric characteristic specification (GPS) of product - surface texture: contour curve method; characteristic evaluation of plateau structure surface - Part 2: characteristic evaluation of height by load curve of linear expression".

The metal electrode 5 is manufactured by processing such that its surface becomes flat. Therefore, the occurrence probability of the protrusion is very small. Ra and Rz used in the evaluation of the surface state in the related art are defined on the contour curve (curved surface). Ra (arithmetic average height of the roughness curve) is a parameter representing the average state, which is unsuitable for the evaluation of protrusions. Further, in Rz (maximum height of roughness curve), protrusions with low occurrence probability may deviate from the measurement visual field, and there is a risk of overlooking the protrusions. However, by evaluating Rpk (height of the protruding peak portion: the average height of the protruding peak portion above the core portion) defined on the load curve based on the roughness distribution, the state of the protrusion with low occurrence probability can be appropriately evaluated.

Although the thickness of the metal electrode 5 can be arbitrarily set, it is preferably 0.2 mm or less, more preferably 0.001 to 0.2 mm, and further preferably 0.003 to 0.03 mm. It is preferable that the thickness of parts except for the opening is constant, but it may be changed as necessary. The opening ratio of the metal electrode 5 is preferably 50 to 85%, more preferably 60 to 80%, and still more preferably 65 to 75%. If the thickness and the opening ratio of the metal electrode 5 are within this range, damage to the ion exchange membrane due to the carbon fibers can be further prevented. The opening ratio is obtained by dividing [the total area of the openings of the metal electrode] by [the area of one surface of the metal electrode including the opening].

As described above, by sandwiching the metal electrode 5 between the carbon electrode 2 and the ion exchange membrane 6, it is also possible to limit the formation of through-holes in the ion exchange membrane 6 by the carbon fibers constituting the carbon electrode 2. If the height (Rpk) of the protruding peak portion of the surface of the metal electrode 5 which is in contact with the ion exchange membrane 6 is 0.1 to 2 μm, it can be said that the first main surface of the metal electrode 5 is a flat surface in which generation of protrusions is sufficiently limited. That is, the metal electrode 5 does not cause cracks or through-holes in the ion exchange membrane 6. Therefore, the thickness of the ion exchange membrane 6 can be reduced, and the cell resistance of the redox flow secondary battery 100 can be reduced.

Ra is preferably 0.05 to 0.4 μm. If Rpk satisfies the above range and Ra is within this range, formation of through-holes in the ion exchange membrane 6 is avoided even from a more macroscopic point of view.

Next, preferred materials for the metal electrode will be described.

The metal electrode 5 is used in the positive electrode chamber Kc and the negative electrode chamber Ka. For example, in the case of a redox flow secondary battery using vanadium ions, the electrolyte used contains sulfuric acid. Therefore, the metal or alloy constituting the metal electrode 5 preferably has corrosion resistance. Therefore, it is preferable to use a material having high corrosion resistance, for example, titanium or an alloy thereof for the metal electrode 5. When such metal is used for the metal electrode 5, the redox flow secondary battery 100 can operate stably.

Next, a metal foil preferably used for a metal electrode will be described.

The metal foil constituting the metal electrode 5 can be selected arbitrarily, regardless of type, material, opening diameter, opening shape, or the like, if the height (Rpk) of the protruding peak portion is within the above-described range, and the metal foil is a metal sheet having an opening (hereinafter referred to as "opening sheet"). Examples thereof include an expanded metal having an opening formed by putting the cuts and stretching a metal sheet, a punching metal having an opening formed by punching out a metal sheet, and the like. In the expanded metal, it is easy to secure the flatness of the metal sheet before putting the cuts, and it is easy to keep the height (Rpk) of the protruding peak portion within the predetermined range even after the opening is formed.

Next, coating of the metal electrode will be described.

In order to prevent the metal electrode 5 from deteriorating with an electrolyte or the like, it is preferable that the surface of the metal electrode 5, preferably all the surfaces, is coated with a coating film. As an effect of the coating, for example, in the case of a metal electrode of titanium, it is avoided that titanium is oxidized and passivated.

Even with the coated metal electrode 5, the height (Rpk) of the protruding peak portion of the first main surface of the electrode is within the above-described range. If the coating as described below is used, when the height (Rpk) of the protruding peak portion of the first main surface of the opening sheet constituting the metal electrode 5 is within the above-described numerical value range, usually, the first main surface after coating also satisfies the same range.

In the metal electrode 5 provided in the positive electrode 3, the surface of the metal electrode 5 is preferably coated with a noble metal or a noble metal oxide, and more preferably coated with a noble metal oxide. The noble metal oxide itself has the activity of changing the valence of vanadium contained in the electrolyte. Therefore, it is possible to limit the occurrence of unnecessary reduction reaction in which the oxide ion becomes oxygen in the positive electrode chamber Kc, and to limit the generation of oxygen in the positive electrode chamber Kc. Gas generation in the electrolyte leads to an increase in the cell resistance of the redox flow secondary battery.

In the metal electrode 5 provided on the negative electrode 4, the surface of the metal electrode 5 is preferably coated with carbon. By being coated with carbon, it is possible to limit unnecessary reaction that the hydrogen ion becomes hydrogen and to limit generation of hydrogen in the negative electrode chamber Ka.

The noble metal or the noble metal oxide that covers the metal electrode 5 of the positive electrode 3 can be arbitrarily selected, but preferably has one or more types of elements selected from the group consisting of iridium (Ir), rhodium (Rh), platinum (Pt) and ruthenium (Ru).

The carbon that covers the metal electrode 5 of the negative electrode 4 can be arbitrarily selected, but it is preferably sputtered carbon, conductive diamond, diamond-like carbon or a mixture thereof. The materials are stable even in an electrolyte and can flow electricity, so the materials can be suitably used as a coating film. In addition, the carbon films formed by the materials can be obtained by a vacuum deposition method, a sputtering film formation method, a plasma ion implantation film formation method (DLC), or the like.

The thickness of the coating is arbitrarily selected. However, the average thickness of the noble metal or the noble metal oxide that covers the metal electrode 5 of the positive electrode 3 is preferably 0.05 to 0.5 $\mu$m. The average thickness of carbon that covers the metal electrode 5 of the negative electrode 4 is preferably 0.03 to 0.3 $\mu$m.

If the thickness of the coating films is within the above range, occurrence of pin holes or the like in the coating film can be sufficiently avoided. Since a denser film can be formed by carbon than noble metal or noble metal oxide, the film thickness may be thin.

<Ion Exchange Membrane>

As the ion exchange membrane 6, a cation exchange membrane or an anion exchange membrane can be used. It can be arbitrarily selected, but specific examples thereof include membranes made of a perfluorocarbon polymer having a sulfonic acid group, a hydrocarbon polymer compound having a sulfonic acid group, a polymer compound doped with an inorganic acid such as phosphoric acid, an organic/inorganic hybrid polymer a part of which substituted with a proton conductive functional group, and a proton conductor impregnated with a phosphoric acid solution or a sulfuric acid solution in a polymer matrix. Of these, perfluorocarbon polymers having a sulfonic acid group are preferable. A perfluorocarbon polymer composed of a hydrophobic Teflon skeleton made of carbon-fluorine (hydrophobic polytetrafluoroethylene skeleton) and a perfluoro side chain having a sulfonic acid group, such as Nafion (registered trademark), can be used more preferably.

Although the thickness of the ion exchange membrane 6 can be arbitrarily selected, it is preferably 120 $\mu$m or

less, more preferably 60 $\mu$m or less, and still more preferably 10 to 40 $\mu$m. As the thickness of the ion exchange membrane 6 is reduced, the cell resistance of the redox flow secondary battery 100 can be reduced.

When the thickness (T) of the ion exchange membrane 6 is determined, it is preferable that the height of a protruding peak portion of the first main surface of the metal electrode 5 which is also a metal protective film is set so as to satisfy the following relational Expression (1).

$$(\mathrm{Rpk(A)} + \mathrm{Rpk(B)}) \times \alpha \leq T \ldots (1)$$

In Expression (1), T is the thickness of the ion exchange membrane, Rpk(A) is the height of the protruding peak portion of the metal electrode of the positive electrode, Rpk(B) is the height of the protruding peak portion of the metal electrode of the negative electrode, and $\alpha$ is a multiplier. $\alpha$ is preferably 1.2, more preferably 1.4, and still more preferably 1.8.

In a case where the metal electrode 5 may be provided only on either the positive electrode 3 or the negative electrode 4 for the reason that no carbon electrode such as a carbon sheet containing carbon fiber or the like is used for one electrode, the thickness of the ion exchange membrane 6 and the height of a protruding peak portion of the first main surface of the metal electrode 5 are preferably set so as to satisfy the following relational expression (2).

$$\mathrm{Rpk} \times \alpha \leq T/2 \ldots (2)$$

In Expression (2), Rpk is the height of the protruding peak portion of the metal electrode. $\alpha$ is a multiplier, and T and $\alpha$ are the same as in Expression (1).

When the thickness of the ion exchange membrane 6 satisfies the above relational expressions (1) and (2), the probability that through-holes are formed in the ion exchange membrane 6 by the metal electrode 5 can be further reduced. By providing the metal electrode 5, the thickness of the ion exchange membrane 6 can be reduced to 60 $\mu$m or less.

As described above, in the redox flow secondary battery 100 according to the present embodiment, the metal electrode 5 is disposed between the carbon electrode 2 and the ion exchange membrane 6, so it is possible to prevent short-circuit which is caused by mixing the positive electrode electrolyte and the negative electrode electrolyte due to formation of the through-holes in the ion exchange membrane 6.

Further, by setting the first main surface of the metal electrode 5 in contact with the ion exchange membrane 6 as a predetermined surface, there is almost no possibility that carbon fibers or the like used for the electrode stick into the ion exchange membrane and cause cracks or through-holes, so the thickness of the ion exchange membrane 6 can be reduced, and the cell resistance of the redox flow secondary battery 100 can be reduced.

Depending on the aspect of distribution in the market, a composite having the metal electrode 5 provided on the ion exchange membrane 6 may be distributed. In this case, the composite body includes an ion exchange membrane 6, and a metal electrode 5 provided on at least one surface of the ion exchange membrane 6. The height (Rpk) of the protruding peak portion of the surface of the metal electrode 5 in contact with the ion exchange membrane 6 is 0.1 to 2 $\mu$m.

[Operation of Redox Flow Battery]

An example of the operation of the redox flow secondary battery 100 will be described with reference to FIG. 1. In the electrode chamber K of the redox flow secondary battery 100, an electrolyte is supplied from an inlet (illustration omitted) (in FIG. 1, the flow of the electrolyte is indicated as Fin (Flow in)). The electrolyte supplied into the electrode chamber K reacts with the carbon electrode 2 in the electrode chamber K. Ions generated during the reaction flow between the positive electrode 3 and the negative electrode 4 through the ion exchange membrane 6 to perform charging and discharging. The electrolyte after the reaction is discharged from the outlet (illustration omitted) (in FIG. 1, the flow of the electrolyte is indicated as Fout (Flow out)). In the positions corresponding to the arrow portions in FIG. 1, inlets and outlets may be provided in the cell frame 20.

The positions and the numbers of the inlets and the outlets can be arbitrarily set as long as the electrolyte can flow through the electrode chamber K. The inlets, the outlets, and the flow path may be provided in the cell frame 20. In the case where a flow path is formed by providing a groove portion or the like on the surface of the bipolar plate 1 on the electrode chamber K side or by providing a through-hole in the bipolar plate 1, inlets and outlets connected to the groove portion of the bipolar plate 1 and the flow path may be provided. The supplied electrolyte may be discharged through a flow path in which the cell frame 20 communicates with the bipolar plate 1.

When the redox flow secondary battery 100 is operated, the carbon electrode 2 pushes the ion exchange membrane 6 due to the flow of the electrolyte supplied into the electrode chamber K. In the absence of the metal electrode 5, through-holes may be formed in the ion exchange membrane 6 by the carbon fibers constituting the carbon electrode 2. Since the redox flow secondary battery according to the present embodiment has the predetermined metal electrode 5, if the metal electrode 5 is brought into close contact with the ion exchange membrane 6 due to the flow of the electrolyte, formation of through-holes or the like in the ion exchange membrane is limited.

[Manufacturing Method of Redox Flow Battery]

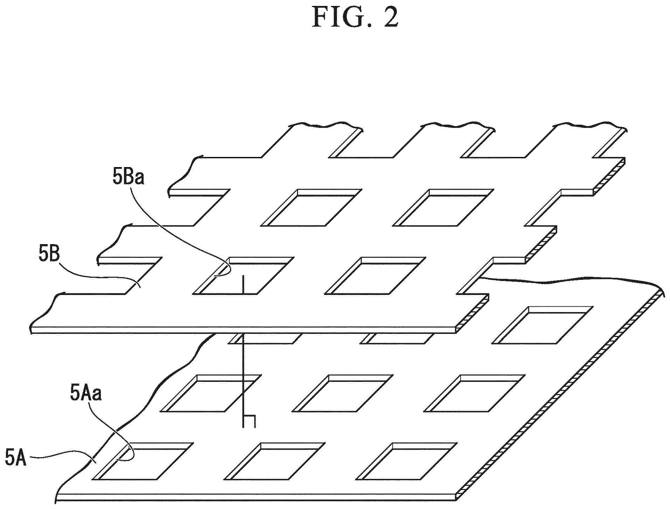

An example of a manufacturing method of a redox flow battery will be described. First, each member is prepared.
Known products can be used for bipolar plate 1, ion exchange membrane 6, and cell frame 20. As long as there is no particular problem, size and type may be arbitrarily selected as required. For example, a commercially available product or the like may be purchased.
As for the carbon electrode 2, as long as there is no particular problem, size and type can be arbitrarily selected as required. When carbon felt, carbon paper, or the like is used as the carbon electrode 2, for example, a known one such as a commercially available product may be obtained and used.
It is preferable that the metal electrode 5 as a metal protective film having an opening is obtained by processing materials such that the height (Rpk) of the protruding peak portion of the surface in contact with the ion exchange membrane 6 is 0.1 to 2 $\mu$m. For example, an opening sheet may be produced by preparing a metal sheet on which a predetermined surface is formed by rolling, putting the cuts therein, and stretching it. Alternatively, a metal protective film having an opening may be obtained by forming a hole in the metal sheet and then rolling it. In order to make Rpk after rolling in the range of 0.1 to 2 $\mu$m, rolling using a special metal mold with very high flatness or rolling with special compression conditions may be performed. After rolling, polishing such as chemical polishing, buffing, or electrolytic polishing may be performed to set Rpk within a predetermined range. By processing the opening sheet in this way, it is possible to obtain the metal electrode 5 having the above-described first main surface.
The shape of the opening of the metal protective film can be arbitrarily selected, and polygonal shapes such as square and rectangular shapes, circular shapes and elliptical shapes are exemplary examples. The openings may be randomly arranged, but it is also preferable that the openings are regularly arranged. An example of the metal protective film is 5A in FIG. 2.
The number of openings can be arbitrarily selected as required. For example, 10 to 1000 openings per 1 cm$^2$ area are included, and 100 to 300 openings are preferably included.
Then, as shown in FIG. 1, the cell frame 20 is provided on the ion exchange membrane 6. A stacked body in which the metal electrode 5, the carbon electrode 2, the bipolar plate 1, the carbon electrode 2, and the metal electrode 5 are stacked in this order is prepared. The stacked body in which the metal electrode 5, the carbon electrode 2, the bipolar plate 1, the carbon electrode 2, and the metal electrode 5 are stacked in this order is inserted into the opening of the cell frame 20.
Next, the ion exchange membrane 6 is disposed thereon. Subsequently, the same structures are sequentially stacked such that the stacked body is provided with the ion exchange membrane 6 interposed therebetween. A gasket or the like is provided on the joint surface between the cell frames 20. Then, after stacking the structures of the necessary number, end plates are provided at both ends in the stacking direction. Finally, by tightening and fixing the end plates to each other, the stacked body is compressed to fit within the opening of the cell frame 20. As a result, the respective members constituting the stacked body are brought into close contact with each other, so the electrical conductivity is enhanced. The cell frames 20 are brought into close contact with each other through a gasket to prevent leakage of electrolyte from the inside of the cell frame 20.
As described above, according to the redox flow secondary battery according to the present embodiment, even if the carbon electrode 2 having carbon fibers strongly presses against the ion exchange membrane 6 side during the assembly process and operation of the redox flow secondary battery, it is possible to prevent the formation of through-holes in the ion exchange membrane 6.

(Second Embodiment)

An example of a redox flow secondary battery having a structure in which two layers of metal electrodes are stacked will be described as a second embodiment.
FIG. 2 is a perspective view enlarging a part of a metal electrode of a redox flow secondary battery according to a second embodiment. In the present invention, the number of metal protective films may be 1, or two or more number arbitrarily selected, for example, any number selected from 2 to 10 such as 2, 3, or 4. The redox flow secondary battery differs from the redox flow secondary battery according to the first embodiment in that a second metal electrode 5B is further provided between the metal electrode 5 and the carbon electrode 2. Hereinafter, regarding the two metal electrodes, the metal electrode on the ion exchange membrane 6 side is referred to as a first metal electrode 5A, and the metal electrode on the bipolar plate 1 side is referred to as a second metal electrode 5B. The shapes of the openings and the distances between the openings are the same and basically have the same pattern, but the shapes of the openings and the distances between the openings may be different from each other.

The first metal electrode 5A is the same electrode as the metal electrode 5 according to the first embodiment. On the other hand, since the second metal electrode 5B is not directly in contact with the ion exchange membrane 6, the range of the height (Rpk) of the protruding peak portion is not particularly limited to 0.1 to 2 $\mu$m. Except this point, the metal electrode 5B is the same as the metal electrode 5A. If the second metal electrode 5B has the height of a protruding peak portion according to the present invention, there is no particular problem.

As shown in FIG. 2, in the first metal electrode 5A and the second metal electrode 5B, the positions where the openings are formed are shifted in the stacking direction. In this way, it is preferable that the positions of the openings are shifted. In this configuration, the electrolyte flowing in from the opening 5Aa of the first metal electrode 5A flows, for example, between the first metal electrode 5A and the second metal electrode 5B in the in-plane direction, and then flows out from the opening 5Ba of the second metal electrode 5B.

That is, it can be regarded that a flow path in the in-plane direction is formed between adjacent metal electrodes 5 by stacking a plurality of metal electrodes 5. By forming the flow path in the in-plane direction, it is possible to quickly discharge the electrolyte after the reaction to the outlet.

In the redox flow secondary battery according to the second embodiment, the first main surface of the metal electrode in contact with the ion exchange membrane 6 has a predetermined shape set in the present invention. Therefore, formation of through-holes in the ion exchange membrane 6 is limited.

Further, the presence of two layers of metal electrodes creates a flow of the electrolyte in the in-plane direction along the extending direction of the metal electrode, so the flow of the electrolyte can be made smooth. On the other hand, the distance between the ion exchange membrane and the carbon electrode increases, and there is a possibility that adverse effects such as an increase in cell resistance may occur. Therefore, either one of the configurations of the redox flow secondary battery according to the first embodiment and the redox flow secondary battery according to the second embodiment can be selected depending on the application.

Although preferred embodiments of the present invention have been described in detail above, the present invention is not limited to the specific embodiments. Various modifications, changes, additions, omissions and the like are possible within the scope of the gist of the present invention described in the claims.

[Examples]

Next, preferred examples of the present invention will be described more concretely with reference to examples and comparative examples. However, the present invention is not limited to only the following examples.

(Example 1)

[Preparation of Member]

A flat bipolar plate of 50 mm $\times$ 50 mm made of a carbon-resin molded body was prepared.

A cell frame 20 was prepared. The size of the cross section in the in-plane direction of the electrode chamber K surrounded by the cell frame 20 was 50 mm $\times$ 50 mm.

For the carbon electrode, carbon fiber paper (GDL 10 AA, manufactured by SGL Co., Ltd.) of 50 mm $\times$ 50 mm was used.

For the ion exchange membrane, Nafion N212 (registered trademark, manufactured by DuPont) was used. The thickness of the ion exchange membrane was about 50 $\mu$m.

An expanded metal made of titanium having a thickness of 0.02 mm was used as an opening sheet as a metal protective film. The opening ratio was about 70%, the number of openings was about 200 per 1 cm$^2$, and the size iwas50 num $\times$ 50 mm. This expanded metal was chemically polished to make Rpk 1 $\mu$m or less. Thereafter, the opening sheet used for the positive electrode was coated with iridium oxide to form a coating film. The opening sheet used for the negative electrode was coated with sputtered carbon to form a coating film. In this way, metal electrodes (metal protective films) on the positive electrode side and the negative electrode side were obtained. The thickness of the coating film of the metal electrode on the positive electrode side was 0.1 $\mu$m, and the thickness of the coating film of the metal electrode on the negative electrode side was 0.05 $\mu$m. Further, the height (Rpk) of the protruding peak portion of the surface of the metal electrode in contact with the ion exchange membrane was 0.8 $\mu$m in both the positive electrode side and the negative electrode side.

By stacking the prepared members in order, the redox flow secondary battery of Example 1 including two cells was assembled. That is, the redox flow secondary battery has a cell stack structure in which one more cell was stacked on one cell.

(Comparative Example 1)

Comparative Example 1 is different from Example 1 in that no metal electrode is provided. The other configurations are the same as in Example 1.

(Comparative Example 2)

In Comparative Example 2, neither the expanded metal on the positive electrode side nor the expanded metal on the negative electrode side was polished. Therefore, the height (Rpk) of the protruding peak portion of the surface of the metal electrodes in contact with the ion exchange membrane was 3.2 $\mu$m. This point is different from Example 1. The other configurations are the same as in Example 1.

(Example 2)

In Example 2, neither the opening sheet of the positive electrode nor the open sheet of the negative electrode was coated. This point is different from Example 1. The other configurations are the same as in Example 1.

(Examples 3 to 5)

In Examples 3 to 5, the film thickness of the coating film that covers the opening sheets of the positive electrode and the negative electrode was changed as shown in Table 1. This point is different from Example 1. Other configurations are the same as in Example 1.

(Examples 6, 7)

In Examples 6, 7, the film thickness of the ion exchange membrane was changed as shown in Table 1. This point is different from Example 1. Other configurations are the same as in Example 1.

(Comparative Examples 3, 4)

In Comparative Examples 3, 4, the film thickness of the ion exchange membrane was changed as shown in Table 1. This point is different from Comparative Example 1. Other configurations are the same as in Comparative Example 1.

(Measurement and Evaluation)

In the redox flow secondary batteries of each example and each comparative example, an aqueous solution containing vanadium ions (IV valence) and sulfuric acid was introduced to the positive electrode side, and an aqueous solution containing vanadium ions (III valence) and sulfuric acid was introduced to the negative electrode side as electrolytes, and electrolytes of 25 ml were circulated by a tube pump. The flow rate of the electrolyte was set to 28 ml/min. The current during charging and discharging was 2A (80 mA/cm$^2$), the charge stop voltage was 1.75 V, and the discharge stop voltage was 1.00 V. As battery characteristics, cell resistivity and coulomb efficiency were measured and compared. An increase in cell resistance when it was operated continuously for one month was checked.

[Table1]

| | Ion exchange membrane thickness ($\mu$m) | Metal electrode | Coating thickness (positive electrode) ($\mu$m) | Coating thickness (negative electrode) ($\mu$m) | Rpk of opening sheet ($\mu$m) | Rpk of metal electrode ($\mu$m) | Coulomb efficiency (%) | Cell resistance ($\Omega \cdot cm^2$) | Cell resistance increase |
|---|---|---|---|---|---|---|---|---|---|
| Example 1 | 50 | Ti | 0.1 | 0.05 | 0.8 | 0.8 | 98 | 0.91 | None |
| Comparative Example 1 | 50 | - | - | - | - | - | 90 | 0.93 | None |
| Comparative Example 2 | 50 | Ti | 0.1 | 0.05 | 3.2 | 3.2 | 93 | 0.92 | None |
| Example 2 | 50 | Ti | 0 | 0 | 0.6 | 0.6 | 98 | 0.91 | After 10 days |
| Example 3 | 50 | Ti | 0.02 | 0.02 | 0.8 | 0.8 | 98 | 0.92 | After one month |
| Example 4 | 50 | Ti | 0.05 | 0.03 | 0.8 | 0.8 | 98 | 0.91 | None |
| Example 5 | 50 | Ti | 0.5 | 0.3 | 2 | 2 | 97 | 0.90 | None |
| Example 6 | 125 | Ti | 0.1 | 0.05 | 0.8 | 0.8 | 99 | 1.5 | None |
| Comparative Example 3 | 125 | - | - | - | - | - | 98 | 1.7 | None |
| Example 7 | 20 | Ti | 0.1 | 0.05 | 0.8 | 0.8 | 96 | 0.87 | None |
| Comparative Example 4 | 20 | - | - | - | - | - | 55 | 0.90 | None |

Comparing Example 1 with Comparative Example 1 and Comparative Example 2, the Coulomb efficiency of Example 1 was larger, and the cell resistance was smaller. This is because it is determined that through-holes, cracks, or the like do not enter the ion exchange membrane by providing a predetermined metal electrode.

Here, the difference of 1% of the coulomb efficiency in the redox flow secondary battery has a large meaning. In the redox flow secondary battery, charge and discharge are repeatedly performed. Therefore, the difference of 1 % cumulatively contributes to each charge and discharge, greatly affecting the performance when actually using the redox flow secondary battery. That is, the difference of several% of the coulomb efficiency between Example 1 and Comparative Example 1 and Comparative Example 2 has a large influence on actual performance.

Comparing Examples 1 to 5, in Examples 2 and 3, the cell resistance increased due to continuous operation. Thereafter, when the redox flow secondary batteries of Examples 2 and 3 were disassembled, the titanium used for the metal electrode was passivated. In Examples 1, 4 and 5, the cell resistance did not rise. That is, it is found that, as in Examples 1, 4, and 5, coating the surface of the metal electrode with a predetermined film thickness allows the redox flow secondary battery to operate stably for a long term. The redox flow secondary batteries of Examples 2 and 3 operate with high coulomb efficiency and can be sufficiently used depending on applications not involving large current.

Further, according to the result of Comparative Example 3, when the thickness of the ion exchange membrane is sufficiently thick, it can be seen that without providing a metal electrode, the coulomb efficiency decreases by about 1% as compared with Example 6 in which the metal electrode is provided. However, if the thickness of the ion exchange membrane is too thick, the cell resistivity increases.

On the other hand, according to the results of Example 7 and Comparative Example 4, the cell resistivity can be decreased by decreasing the thickness of the ion exchange membrane. According to Example 7, it can be seen that even if the thickness of the ion exchange membrane is as thin as 20 $\mu$m, a decrease in coulomb efficiency is limited by providing the metal electrode. That is, by providing the metal electrode, it can be said that the thickness of the ion exchange membrane can be reduced.

Industrial Applicability

The present invention can provide a redox flow secondary battery having low resistance and excellent coulomb efficiency.

Reference Signs List

| | |
|---|---|
| 1 | bipolar plate |
| 1A | positive electrode portion |
| 1B | negative electrode portion |
| 2 | carbon electrode |
| 3 | positive electrode |
| 4 | negative electrode |
| 5 | metal electrode |
| 5A | first metal electrode |
| 5B | second metal electrode |
| 5Aa, 5Ba | opening |
| 6 | ion exchange membrane |
| 10 | cell |
| 20 | cell frame |
| 100 | redox flow secondary battery |
| Kc | positive electrode chamber |
| Ka | negative electrode chamber |
| K | electrode chamber |

**Claims**

1. A redox flow secondary battery comprising:

   a positive electrode;
   a negative electrode facing the positive electrode; and

an ion exchange membrane provided between the positive electrode and the negative electrode,
wherein one or both of the positive electrode and the negative electrode include a metal protective film and a carbon electrode including carbon fibers in order from the ion exchange membrane side,
wherein a first main surface of the metal protective film is provided on the ion exchange membrane side, and
wherein the metal protective film has an opening, and
a height of a protruding peak portion of a surface which is the first main surface is 0.1 to 2 μm.

2. The redox flow secondary battery according to claim 1,
wherein the metal protective film and the carbon electrode are provided on both the positive electrode and the negative electrode.

3. The redox flow secondary battery according to claim 2,
wherein when a thickness of the ion exchange membrane is T, the height of a protruding peak portion of the metal protective film satisfies following relational Expression (1),

$$(Rpk(A) + Rpk(B)) \times 1.2 \leq T \leq 60 \ \mu m \ \dots \ (1)$$

(in Expression (1), T is the thickness (μm) of the ion exchange membrane, Rpk(A) is the height (μm) of the protruding peak portion of the metal protective film of the positive electrode, Rpk(B) is the height (μm) of the protruding peak portion of the metal protective film of the negative electrode, respectively).

4. The redox flow secondary battery according to any one of claims 1 to 3,
wherein the metal protective film is a metal electrode having conductivity.

5. The redox flow secondary battery according to claim 4,
wherein a surface of the metal electrode of the positive electrode is coated with a noble metal or a noble metal oxide.

6. The redox flow secondary battery according to claim 4,
wherein a surface of the metal electrode of the negative electrode is coated with carbon.

7. The redox flow secondary battery according to any one of claims 4 to 6, further comprising:

a second metal electrode having an opening between the metal electrode and the carbon electrode,
wherein positions of the openings of the metal electrode and positions of the openings of the second metal electrode are shifted from each other.

8. A redox flow secondary battery metal electrode of the redox flow secondary battery according to any one of claims 1 to 7, comprising:

an opening,
wherein a height of a protruding peak portion of a surface of at least a first main surface is 0.1 to 2 μm.

9. The metal electrode according to claim 8,
wherein the metal electrode is made of titanium or an alloy thereof.

10. The metal electrode according to claim 9,
wherein the metal electrode is made of an expanded metal.

11. The metal electrode according to any one of claims 8 to 10,
wherein the metal electrode has a thickness of 0.2 mm or less.

12. The metal electrode according to any one of claims 8 to 11,
wherein a surface of the metal electrode is coated with a noble metal or a noble metal oxide.

13. The metal electrode according to claim 12,
wherein a noble metal element constituting the noble metal or the noble metal oxide is one or more types of elements selected from the group consisting of iridium (Ir), rhodium (Rh), platinum (Pt) and ruthenium (Ru).

14. The metal electrode according to claim 12 or 13,
   wherein an average thickness of a coating of the noble metal or the noble metal oxide is 0.05 to 0.5 μm.

15. The metal electrode according to any one of claims 8 to 11,
   wherein a surface of the metal electrode is coated with carbon.

16. The metal electrode according to claim 15,
   wherein the carbon is sputtered carbon, conductive diamond, diamond-like carbon or a mixture thereof.

17. The metal electrode according to claim 15 or 16,
   wherein an average thickness of a coating of the carbon is 0.03 to 0.3 μm.

# FIG. 1

FIG. 2

<table>
<tr><td colspan="2" align="center"><b>INTERNATIONAL SEARCH REPORT</b></td><td>International application No.<br>PCT/JP2017/031656</td></tr>
</table>

A.  CLASSIFICATION OF SUBJECT MATTER
*H01M8/18(2006.01)i, H01M4/86(2006.01)i*

According to International Patent Classification (IPC) or to both national classification and IPC

B.  FIELDS SEARCHED

Minimum documentation searched (classification system followed by classification symbols)
H01M8/18, H01M4/86

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2015-530709 A  (Thyssenkrupp Industrial Solutions AG),<br>15 October 2015 (15.10.2015),<br>& US 2015/0236363 A1      & WO 2014/033238 A1<br>& DE 102012017306 A1      & CA 2883457 A1<br>& CN 104620432 A          & KR 10-2015-0052249 A | 1-17 |
| A | US 8343646 B1  (ZINC AIR INC.),<br>01 January 2013 (01.01.2013),<br>& WO 2013/126083 A1      & CN 104205423 A | 1-17 |
| A | JP 5890561 B1  (Galaxy Co., Ltd.),<br>22 March 2016 (22.03.2016),<br>(Family: none) | 1-17 |

☒  Further documents are listed in the continuation of Box C.      ☐  See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>    22 September 2017 (22.09.17) | Date of mailing of the international search report<br>    03 October 2017 (03.10.17) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (January 2015)

**INTERNATIONAL SEARCH REPORT**

International application No.

PCT/JP2017/031656

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-65530 A (Sumitomo Electric Industries, Ltd.), 11 April 2013 (11.04.2013), (Family: none) | 1-17 |
| A | JP 2005-158383 A (Sumitomo Electric Industries, Ltd.), 16 June 2005 (16.06.2005), (Family: none) | 1-17 |
| A | JP 2-148658 A (Toyobo Co., Ltd.), 07 June 1990 (07.06.1990), (Family: none) | 1-17 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016172243 A
- JP 3560181 B
- JP 2014033238 W

- JP 2015228364 A
- JP 2015156076 W
- JP 2013065530 A